(19) Europäisches Patentamt
European Patent Office
Office européen des brevets

(11) **EP 4 227 277 A1**

(12) **EUROPEAN PATENT APPLICATION**
published in accordance with Art. 153(4) EPC

(43) Date of publication:
**16.08.2023 Bulletin 2023/33**

(21) Application number: **21877470.1**

(22) Date of filing: **30.09.2021**

(51) International Patent Classification (IPC):
**C03C 12/00** $^{(2006.01)}$    **C03B 37/005** $^{(2006.01)}$
**C03C 3/062** $^{(2006.01)}$    **C03C 3/087** $^{(2006.01)}$
**G21C 13/00** $^{(2006.01)}$    **G21D 1/00** $^{(2006.01)}$
**G21F 9/30** $^{(2006.01)}$

(52) Cooperative Patent Classification (CPC):
**C03B 37/005; C03C 3/062; C03C 3/087;
C03C 12/00; G21C 13/00; G21D 1/00; G21F 9/30;**
Y02E 30/00; Y02E 30/30

(86) International application number:
**PCT/JP2021/036084**

(87) International publication number:
**WO 2022/075169 (14.04.2022 Gazette 2022/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.10.2020 JP 2020169452**

(71) Applicant: **Nippon Fiber Corporation
Abiko-City Chiba 270-1162 (JP)**

(72) Inventor: **FUKAZAWA, Hiroshi
Abiko-City Chiba 2701162 (JP)**

(74) Representative: **Mewburn Ellis LLP
Aurora Building
Counterslip
Bristol BS1 6BX (GB)**

(54) **INORGANIC OXIDE FLAKES RESISTANT TO DEGRADATION BY RADIATION**

(57)    [Object] To provide inorganic oxide flakes having excellent resistance to radiation damage.

[Solving Means] Inorganic oxide flakes mainly composed of $SiO_2$, $Al_2O_3$, CaO, and $Fe_2O_3$ are presented. The mass percentages of the components in terms of oxide in the flakes are set as follows: i) the sum of $SiO_2$ and $Al_2O_3$ is from 40% by mass to 70% by mass; ii) the ratio $Al_2O_3/(SiO_2 + Al_2O_3)$ (mass ratio) is in the range of 0.15 to 0.40; iii) the content of $Fe_2O_3$ is from 16% by mass to 25% by mass; and iv) the content of CaO is from 5% by mass to 30% by mass. The inorganic oxide flakes have enhanced resistance to radiation damage.

**Description**

TECHNICAL FIELD

The present invention relates to novel inorganic oxide flakes. More specifically, the present invention relates to inorganic oxide flakes with enhanced resistance to radiation damage.

BACKBROUND ART

Glass flakes are widely used as industrial materials today. For example, when glass flakes are blended with the thermosetting resin constituting the lining material, the penetration of corrosive substances into the inside of the lining coating layer is suppressed, so that the anti-corrosion performance of the lining material is remarkably improved. For this reason, glass flakes are indispensable as auxiliary raw materials for heavy corrosion protection material.

In addition, glass flakes are used as reinforcement and fillers of thermoplastic resins like glass fibers. While glass fiber reinforced resin tends to cause anisotropy in the mechanical strength and heat shrinkage of the molded product, the molded product of glass flake reinforced resin has suppressed anisotropy and is excellent in dimensional accuracy. For this reason, glass flakes are indispensable as an auxiliary raw material to constitute materials for precision instruments.

In recent years, glass flakes with improved specific properties are developed and disclosed such as flakes with improved chemical durability (e.g., WO 2010/024283 A1 (Patent Document 1), counterpart publication US 2011/0151261 A1 (Patent Document 2)),and glass flakes with enhanced visible light absorption performance (e.g., WO 2004/076372 A1 (Patent Document 3), counterpart publication US 2006/0048679 A1 (Patent Document 4)).

CITATION LIST

PATENT DOCUMENT

Patent Document 1:WO 2010/024283 A1
Patent Document 2:US 2011/0151261 A1
Patent Document 3:WO 2004/076372 A1
Patent Document 4:US 2006/0048679 A1

SUMMARY OF THE INVENTION

PROBLEM TO BE SOLVED BY THE INVENTION

However, glass flakes have the disadvantage that they deteriorate when exposed to radiation due to the poor resistance to radiation damage of glass substrate.

If the radiation resistance of glass flakes is improved, such glass flakes are expected to enhance their use in facilities, equipment, components, and materials that are exposed to radiation for long periods of time, such as nuclear power generation facilities and space equipment.

Therefore, the present inventor has worked on the development of a novel inorganic oxide flake with enhanced resistance to radiation damage in place of glass flake.

MEANS FOR SOLVING THE PROBLEM

Finally, the inventor found that with regard to flakes made of inorganic oxides, the flakes are of enhanced resistance to radiation damage when the sum of $SiO_2$ and $Al_2O_3$ in the flakes is in a specific range, and the proportion of $Al_2O_3$ in the sum of $SiO_2$ and $Al_2O_3$ is in a specific range and the amount of each of $Fe_2O_3$ and CaO is in a specific range.

That is , the present invention is inorganic oxide flakes containing $SiO_2$, $Al_2O_3$, CaO, and $Fe_2O_3$ as main components, wherein the respective mass percentage of the component in terms of oxide in the inorganic oxide flakes are as follows:

i) The sum of $SiO_2$ and $Al_2O_3$ is 40% by mass or more and 70% by mass or less,
ii) The ratio (mass ratio) of $Al_2O_3$ to the sum of $SiO_2$ and $Al_2O_3$ is in the range of 0.15-0.40,
iii) $Fe_2O_3$ is 16% by mass or more and 25% by mass or less,

iv) CaO is by 5% by mass or more and 30% by mass or less.

Since the inorganic oxide flakes of the present invention are excellent in resistance to radiation damage, they are suitable for reinforcing materials or fillers constituting the irradiated portion.

In another aspect, the present invention provides a method for producing inorganic oxide flakes excellent in resistance to radiation damage using industrial waste such as fly ash, copper slag, and steel slag as raw materials.

In the following description, the above requirement i) to iv) may be simply described as "the four compositional requirements of the present invention".

The inorganic oxide flakes of the present invention are obtained by melting a blend of various inorganic oxides used as raw materials and processing the melt materials into flakes. Here, there is no substantial difference between the component ratio of the raw material formulation (hereinafter sometimes abbreviated simply as the formulation) and the component ratio of the flakes obtained from the melt. Therefore, the component ratio of the raw material formulation can be the component ratio of the flakes.

The inorganic oxide flakes of the present invention are obtained by blending raw materials so that the ratios of $SiO_2$, $Al_2O_3$, $Fe_2O_3$ and CaO in the flakes are within the above range, and then melting thus formulated raw materials. Hereafter, the melt of the formulated raw materials may be referred to simply as the melt.

The sum of $SiO_2$ and $Al_2O_3$ in the inorganic oxide flakes of the present invention is 40% by mass or more and 70% by mass or less. In the following description, $SiO_2$ may be abbreviated as an S component, and the content of $SiO_2$ may be indicated as [S]. Similarly, $Al_2O_3$ may be abbreviated as A component, and the content of $Al_2O_3$ may be indicated as [A]. When the sum of [S] and [A] is outside the above range, that is, less than 40% by mass, or more than 70% by mass, the melting temperature of the formulation becomes too high, the viscosity of the melt increases, or conversely, the viscosity of the melt becomes too low, and it becomes difficult to process the melt into flake.

In the inorganic oxide flakes of the present invention, the ratio of $Al_2O_3$ to the sum of $SiO_2$ and $Al_2O_3$ ([A] / ([A] + [S])) (mass ratio) is in the range of 0.15 ~ 0.40. If the ratio of $Al_2O_3$ to the sum of $SiO_2$ and $Al_2O_3$ is either less than 0.15 or more than 0.40, it becomes difficult to melt the formulation or it becomes difficult to process the melt into flake.

In the inorganic oxide flakes of the present invention, it is necessary that the content of $Fe_2O_3$ is 16% by mass or more. When the content of $Fe_2O_3$ is less than 16% by mass, the radiation resistance of the flake becomes inferior. On the other hand, if the content exceeds 25% by mass, the viscosity of the melt is too low, and it becomes difficult to process the melt into flake. Therefore, the content of $Fe_2O_3$ of the inorganic oxide flakes is preferably 25% by mass or less.

Hereafter, $Fe_2O_3$ is abbreviated as F component, and the content of $Fe_2O_3$ may be indicated as [F].

In the inorganic oxide flakes of the present invention, the content of CaO is preferably 5% by mass or more and 30% by mass or less. When the CaO content is less than 5% by mass, the temperature at which the formulated raw materials start to melt becomes too high, and the energy required for producing inorganic oxide flakes increases, which is not preferable. The content of CaO is preferably 10% by mass or more. On the other hand, if the CaO content exceeds 30% by mass, the viscosity of the melt is too low, and it becomes difficult to process the melt into flake. Hereafter, CaO is abbreviated as the C component, and the content of CaO may be displayed as [C].

When obtaining the inorganic oxide flakes of the present invention, there are no restrictions on the raw material as long as the ratios of $SiO_2$, $Al_2O_3$, $Fe_2O_3$, and CaO are within the above range.

Therefore, each of $SiO_2$, $Al_2O_3$, $Fe_2O_3$, and CaO may be prepared as a starting material, but a silica source rich in $SiO_2$ content, an alumina source rich in $Al_2O_3$ content, an iron oxide source rich in $Fe_2O_3$ content, and a calcium oxide source rich in CaO content are preferably used as starting materials.

Examples of the silica source include, but are not limited to, amorphous silica, silica sand, fumed silica, and volcanic ash.

Examples of the alumina source include, but are not limited to, alumina, mullite and other ores.

Silica alumina sources rich in both silica and alumina include, but are not limited to, kaolinite, montmorillonite, feldspar, and zeolite.

Examples of the iron oxide source include, but are not limited to, iron oxide, iron hydroxide, and iron ore.

Calcium oxide sources include, but are not limited to, calcium carbonate, calcite, dolomite and other ores.

In addition to the above, thermal power generation waste and metal refining waste can also be effectively used as silica sources, alumina sources, iron oxide sources, or calcium oxide sources.

As the thermal power generation waste, fly ash and clinker ash can be used. Fly ash and clinker ash are suitable as silica alumina sources since they are rich in $SiO_2$ and $Al_2O_3$.

However, since fly ash and clinker ash have a low $Fe_2O_3$ content, it is difficult to obtain the inorganic oxide flakes of the present invention by these raw materials alone. However, by additionally blending an appropriate amount of an iron oxide source, the inorganic oxide flakes of the present invention can be obtained at low cost. Coal gasification slag (CGS) produced as waste of the Integrated coal Gasification Combined Cycle (IGCC) can also be a silica alumina source because CGS has a chemical composition almost the same as fly ash. Since coal gasified slag is obtained in the form of granules, it is more advantageous in handling or processing than fly ash.

Examples of metal refining waste mentioned above include steel slag and copper slag. Steel slag has a high CaO content, thus it can be used as a source of calcium oxide. Steel slag includes blast furnace slag, converter slag, and reducing slag. Copper slag can be used as an iron oxide source because of its high $Fe_2O_3$ content.

Therefore, as appropriate, fly ash, clinker ash, or coal gasified slag can be used as the silica alumina source, copper slag can be used as the iron oxide source, and steel slag can be used as the calcium oxide source.

In a preferred embodiment, the majority of silica alumina sources, iron oxide sources, and calcium oxide sources can be covered by industrial waste such as thermal power generation waste and metal refining waste.

In addition, volcanic rocks such as basalt and andesite can also be used as silica alumina sources.

The inorganic oxide flakes of the present invention do not exclude the contamination of inevitable impurities contained in the raw materials. Examples of such impurities include $MgO$, $Na_2O$, $K_2O$, $TiO_2$, $CrO_2$, and the like.

Since the inorganic oxide flakes of the present invention are highly amorphous, there is almost no decrease in strength due to peeling of the crystal phase / amorphous phase interface, and high-strength inorganic oxide flakes can be obtained.

Here, the degree of amorphization, which is a measure of amorphousness, is calculated by the following formula (1) by the X-ray diffraction (XRD) spectrum.

$$\text{Degree of amorphization } (\%) = [\text{Ia}/(\text{Ic}+\text{Ia})]\times100 \qquad (1)$$

In formula (1), Ic represent the sum of the integral values of the scattering intensity of a crystalline peak when X-ray diffraction analysis is subjected on the inorganic oxide material, and Ia is the sum of the integral values of the scattering intensity of the amorphous halo.

The degree of amorphization of the inorganic flakes of the present invention may vary depending on the composition of the inorganic flakes; however, the degree of amorphization usually represents a value of 90% or more. When the degree of amorphization is high, the value may even reach 95% or more, and when the degree of amorphization is highest, the flakes are substantially formed only from an amorphous phase. Here, being substantially formed only from an amorphous phase implies that in the X ray diffraction pattern, only an amorphous halo is observed, and a peak of the crystal phase is not observed.

The resistance to radiation damage of the inorganic oxide flakes of the present invention can be measured by comparing the Vickers hardness before and after irradiation of the inorganic oxide flakes.

EFFECT OF THE INVENTION

Thus, the present invention enables to produce inorganic oxide flakes having enhanced resistance to radiation.

BRIEF DESCRIPTION OF DRAWING

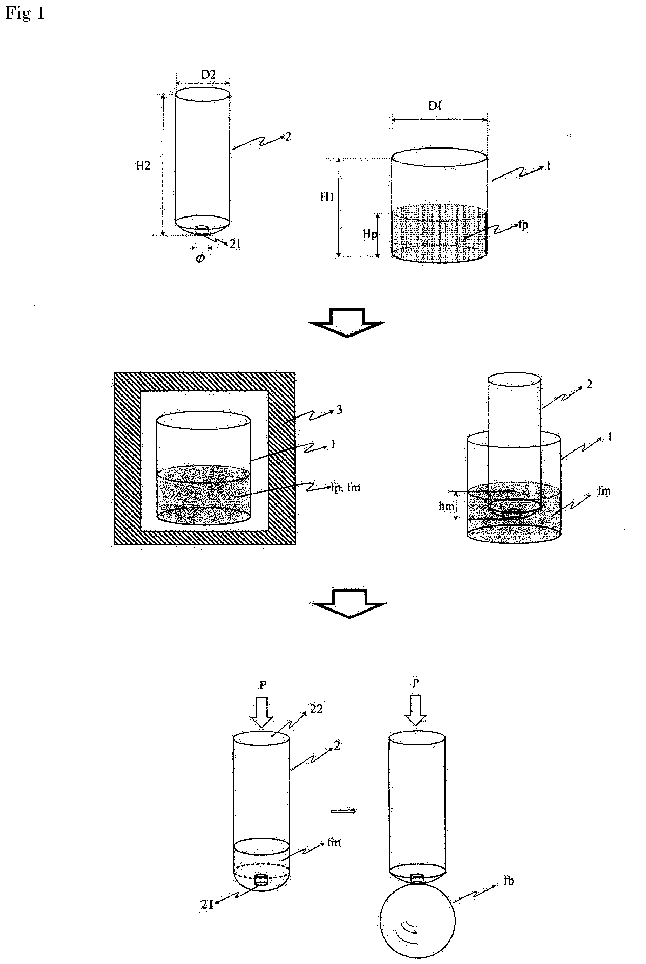

Fig. 1 is a diagram showing an outline of the flake test.

MODE(S) FOR CARRYING OUT THE INVENTION

Hereinafter, the present invention will be specifically described with reference to Test Examples.

In the following Test Examples (Examples, Comparative Examples), the following materials are used as a silica source, an alumina source, a silica alumina source, an iron oxide source, and a calcium oxide source.

< Silica source>

Silicon dioxide: Silicon dioxide reagent (hereinafter, may be referred to as $SiO_2$ (reagent))

<Alumina source>

Aluminum oxide: Aluminum oxide reagent (hereinafter, may be referred to as $Al_2O_3$ (reagent))

<Silica alumina source>

Fly ash RM1: Fly ash containing $Fe_2O_3$:9%, $SiO_2$:62%, $Al_2O_3$:18%, CaO:3% by mass

<Iron oxide source>

Iron (III) oxide: Iron (III) oxide reagent (hereinafter, may be referred to as $Fe_2O_3$(reagent))
Copper slag RM2: Copper slag containing $Fe_2O_3$:9%, $SiO_2$:62%, $Al_2O_3$:18%, CaO:3% by mass

<Calcium oxide source>

Calcium oxide: Calcium oxide reagent (hereinafter, may be referred to as CaO (reagent))
Steel slag RM3: Steel slag containing $Fe_2O_3$:1%, $SiO_2$:19%, $Al_2O_3$:17%, CaO:55% by mass
The component analysis of copper slag, steel slag, and fly ash is based on a fluorescent X-ray analysis method.

< Preparation of powder raw materials>

In the following Test Example, each of the silica source, the alumina source, the iron oxide source, and the calcium oxide source is pulverized, and $SiO_2$, $Al_2O_3$, $Fe_2O_3$, CaO are blended according to a predetermined ratio, and are subjected to the test.

< Flake Test >

The sample of the formulated raw materials is subjected to a flake test (evaluation of processability into flakes) according to the following steps 1 to 4 as stated below. An outline of the test is shown in Figure 1.
Step 1: Approximately 60 grams of the formulated raw materials (fp), which is the raw material for flakes, is placed in a crucible (1) having a diameter (D1) of 20 mm. Separately, a Tammann tube (2) having a diameter (D2) of 10 mm is prepared. The Tammann tube (2) has an opening (21) having a diameter ($\Phi$) of 2 mm at the bottom (upper part of Fig. 1).
Step 2: The crucible (1) in which the formulated raw materials (fp) is loaded is heated in the electric furnace (3) (middle left of Fig. 1). The electric furnace is heated by a predetermined temperature raising program. The maximum temperature inside the furnace is set to 1350°C. The temperature inside the crucible (1) and the melt (fm) is confirmed in advance at a temperature substantially 50°C lower than the temperature inside the furnace.
Step 3: Immediately remove the crucible (1) after temperature rise from the electric furnace (3), and push the Tammann tube (2) downward from the upper part of the crucible (1). The melt (fm) in the crucible (1) enters the inside of the Tammann tube (2) through the opening (21) (middle right in Fig. 1).
Step 4: Subsequently, air is blown from the entrance (22) of the Tammann tube (2) storing the melt (fm) at a pressure of about 10 MPa (lower left in Fig. 1). When the melt (fm) has a moderate viscosity, the melt swells to form a hollow thin film balloon (fb) (lower right in Fig. 1). Flakes are obtained by crushing the balloon.
Based on the results of the flake test according to the above procedure, the flake processability is evaluated and ranked as A, B, or C as follows.

< Evaluation of flake processability>

A: After step 1 to step 4, a balloon is formed.
B: Although step 3 is reached from step 1, a balloon is not formed in step 4 because the viscosity of the melt is too low.
C: Since the melting of the formulated raw materials (fp) does not start even after step 2 or the viscosity of the melt is too high, the melt does not enter the inside of the Tammann tube (2) from the opening (21) during step 3.

[Preliminary test]

Prior to the series of Test Examples, the following preliminary tests were conducted.
Four types of samples having different $SiO_2$, $Al_2O_3$, $Fe_2O_3$, CaO contents were prepared by appropriately blending a silica source, an alumina source, an iron oxide source, and a calcium oxide source.
Each of the four samples thereof was melted and solidified. Samples 3 and 4 satisfy all of the requirements i) to vi) of the present invention as described above, but samples 1 and 2 lack requirement iii) for $Fe_2O_3$ content (Table 1).

The sample of the solidified melt thus obtained was irradiated under the condition of a gamma irradiation amount of 50 kGy using cobalt 60 as a source, and the micro-Vickers hardness before and after irradiation was measured, and the strength retention rate of the sample after irradiation was determined.

The results are shown in Table 1. The results strongly indicate that when the iron oxide ($Fe_2O_3$) content in the sample is 15% or more, the strength retention rate after irradiation becomes remarkably enhanced.

[Table 1]

|  | Unit | Sample 1 | Sample 2 | Sample 3 | Sample 4 |
|---|---|---|---|---|---|
| $Fe_2O_3$[F] | mass % | 3 | 11 | 16 | 19 |
| $SiO_2$[S] |  | 51 | 52 | 48 | 42 |
| $Al_2O_3$[A] |  | 12 | 18 | 12 | 14 |
| CaO[C] |  | 20 | 9 | 17 | 13 |
| Others |  | 14 | 10 | 7 | 12 |
| [S+A] | mass % | 63 | 70 | 60 | 56 |
| [A]/([S]+[A]) | mass ratio | 0.19 | 0.26 | 0.20 | 0.25 |
| [F] | mass % | 3 | 11 | 16 | 19 |
| [C] |  | 20 | 9 | 17 | 13 |
| Strength retention rate after irradiation[%] |  | 30 | 58 | 99 | 99 |

[Example 1]

Fly ash RM1 was blended with an appropriate amount of $SiO_2$ (reagent), $Al_2O_3$ (reagent), $Fe_2O_3$ (reagent), and CaO (reagent). The content of $SiO_2$ , $Al_2O_3$ ,$Fe_2O_3$, and CaO in the formulation is [S] + [A]: 42% by mass, [A] / ([S] + [A]): 0.20, [F]: 19% by mass, [C]: 17% by mass.

As a result of the flake test, a balloon having a film thickness of about 800 nm was obtained. The balloon was crushed to obtain flakes.

Analysis of the X-ray diffraction (XRD) spectrum revealed that the flakes were substantially amorphous.

Next, the flake sample was irradiated with radiation having a dose of 100 GGy using an electron beam as a source.

The Vickers hardness was measured in accordance with JIS Z 2244 for flake samples before and after irradiation, and the strength retention rate after irradiation was calculated. As a result, the strength retention rate of the flakes after irradiation was 90%, and the resistance to radiation damage was excellent (Table 2).

[Examples 2~8]

By changing the blending ratio of $SiO_2$ (reagent), $Al_2O_3$ (reagent), $Fe_2O_3$ (reagent), CaO (reagent), samples having different formulation in the values of i) the sum of $SiO_2$ and $Al_2O_3$, ii) the ratio (mass ratio) of $Al_2O_3$ to the sum of $SiO_2$ and $Al_2O_3$, iii) $Fe_2O_3$ ,or iv) CaO were prepared. Subsequently the same flake test as in Example 1 was performed on each of samples (Table 2).

As a result, for each of the formulations, the melt formed a hollow thin film balloon similar to that of Example 1, and showed good flake processability.

Analysis of the X-ray diffraction (XRD) spectrum revealed that all of the flake samples were substantially amorphous.

Subsequently, as in Example 1, each flake sample was subjected to a radiation irradiation test to determine the strength retention rate after irradiation. As a result, the strength retention rate was 90% or more in all cases, and the flakes were excellent in resistance to radiation damage (Table 2).

Table 2

| | | Unit | Example 1 | Example 2 | Example 3 | Example 4 | Example 5 | Example 6 | Example 7 | Example 8 |
|---|---|---|---|---|---|---|---|---|---|---|
| Components in flake | [S]+[A] | Mass % | 42 | 68 | 58 | 58 | 59 | 54 | 68 | 50 |
| | [A]/([S]+[A]) | Mass ratio | 0.20 | 0.20 | 0.17 | 0.30 | 0.20 | 0.20 | 0.20 | 0.20 |
| | [F] | Mass % | 19 | 18 | 19 | 19 | 18 | 23 | 19 | 16 |
| | [C] | | 17 | 7 | 17 | 17 | 17 | 17 | 7 | 28 |
| Evaluation item | Radiation resistance | | Excellent | Excellent | Excellent | Excellent | Excellent | Excellent | Excellent | Excellent |
| | Flake test | | A | A | A | A | A | A | A | A |

From Table 2, it is clear that flakes can be obtained from all of the formulations satisfying the " the four compositional requirements of the invention", and that all flakes are excellent in resistance to radiation damage.

[Comparative Examples 1~8]

By changing the blending ratio of $SiO_2$ (reagent), $Al_2O_3$ (reagent), $Fe_2O_3$ (reagent), CaO (reagent), samples having different formulation in the values of i) the sum of $SiO_2$ and $Al_2O_3$, ii) the ratio (mass ratio) of $Al_2O_3$ to the sum of $SiO_2$ and $Al_2O_3$, iii) $Fe_2O_3$ ,or iv) CaO were prepared. Subsequently each sample was subjected to the same test as in Example 1.

Table 3

| | | Unit | Com. Example 1 | Com. Example 2 | Com. Example 3 | Com. Example 4 | Com. Example 5 | Com. Example 6 | Com. Example 7 | Com. Example 8 |
|---|---|---|---|---|---|---|---|---|---|---|
| Components in flake | [S]+[A] | Mass % | 38 | 72 | 44 | 58 | 63 | 50 | 70 | 46 |
| | [A]/([S]+[A]) | Mass ratio | 0.20 | 0.20 | 0.13 | 0.42 | 0.20 | 0.20 | 0.20 | 0.20 |
| | [F] | Mass % | 19 | 16 | 23 | 19 | 14 | 27 | 19 | 16 |
| | [C] | Mass % | 17 | 5 | 26 | 17 | 17 | 17 | 3 | 32 |
| Evaluation item | Radiation resistance | | | | | | poor | | | |
| | Flake test | | C | B | C | B | A | C | B | C |

From Table 3, it can be seen that if the sample does not satisfy any one of the "the four compositional requirements of the invention", the sample is difficult to be processed into flakes or the obtained flakes are poor in resistance to radiation damage.

That is, if the sum of [S] + [A] does not meet the lower limit of requirement i), the viscosity of the melt is too low, and flakes cannot be formed (Comparative Example 1). On the other hand, when the sum of [S] + [A] exceeds the upper limit of requirement i), the viscosity of the melt is too high, so it becomes to form flakes (Comparative Example 2).

If the value of [A] / ([S] + [A]) does not meet the lower limit of requirement ii), flakes cannot be formed as a result of too low viscosity of the melt (Comparative Example 3). When the value of [A] / ([S] + [A]) exceeds the upper limit of requirement ii), the viscosity of the melt is too high, making it difficult to form flakes (Comparative Example 4).

When the value of [F] does not meet the lower limit of requirement iii), resistance to radiation damage is inferior (Comparative Example 5). The intensity retention rate after irradiation of the sample of Comparative Example 5 is 60%. When the value of [F] exceeds the upper limit of requirement iii), flakes cannot be formed due to too low viscosity of the melt (Comparative Example 6).

If the value of [C] is less than the lower limit of requirement iv), flakes cannot be formed as a result of too low viscosity of the melt (Comparative Example 7). When the value of [C] exceeds the upper limit of requirement iv), the viscosity of the melt is too high, so flakes cannot be formed (Comparative Example 8).


[Example 9]

In this example, an example to produce inorganic oxide flakes with excellent radiation resistance is presented using only fly ash, copper slag, and steel slag, which are all industrial waste.

A raw material formulation was prepared by blending 50 parts by mass of fly ash RM1 as a silica alumina source, 30 parts by mass of copper slag RM2 as an iron oxide source, and 20 parts by mass of steel slag RM3 as a calcium oxide source. Here, the content of $SiO_2$ , $Al_2O_3$, $Fe_2O_3$ , and CaO in the formulation is [S] + [A]: 59% by mass, [A] / ([S] + [A]): 0.23, [F]: 21% by mass, [C]: 13% by mass.

The raw material formulation was subjected to the same test as in Example 1. As a result, the rank of flake processability was A, and the strength retention rate after irradiation was 87%.


INDUSTRIAL APPLICABILITY

The inorganic oxide flakes of the present invention are suitable as reinforcing materials or fillers of resins and rubbers. Examples of the resin include a thermoplastic resin and a thermosetting resin. Examples of the thermoplastic resin include, but are not limited to, polypropylene, ABS resin, AS resin, polyphenylene ether, polyamide, polyamideimide, and polyketone. Examples of rubber include thermoplastic rubber.

The inorganic oxide flakes of the present invention can be suitably used as auxiliary raw materials for improving anti-corrosion properties of lining materials and paints. Examples of the base material of lining material and of the paint include, but are not limited to, thermosetting resins such as vinyl ester resins and epoxy resins and curable rubbers.

The resin, rubber, or coating material containing the inorganic oxide flakes of the present invention is excellent in resistance to radiation damage. Therefore, it is suitable as a material constituting the irradiated portion. Facilities, equipment, and materials in the fields of nuclear power, aerospace, and medical care can be mentioned as representative examples of irradiated portion.

Examples of the facilities, instruments, and members in the field of nuclear power include:

- facilities, instruments, and members for nuclear power generation;
- facilities, instruments, and members for mining and processing uranium ores;
- facilities, instruments, and members for secondary processing treatment of nuclear fuel (including conversion, concentration, reconversion, molding processing, and MOX manufacturing of the same fuel);
- facilities, instruments, and members for storage, treatment, and retreatment of used nuclear fuel;
- facilities, instruments, and members for storage, treatment, and disposal of radioactive waste;
- transport instruments and members for uranium ores, secondary processing products of nuclear fuel, used nuclear fuels, or radioactive waste; and
- other nuclear-related facilities, instruments, and members.


More specific examples of the facilities, instruments, and members for nuclear power generation include reactor buildings (including research reactors and test reactors), reactor containment vessels, piping in nuclear reactor facilities, and decommissioning robots.

Examples of the facilities, instruments, and members used in the field of aerospace include a space base building, a space station, an artificial satellite, a planetary exploration satellite, and a space suit.

Examples of the facilities, instruments, and members used in the field of medicine include medical devices that utilize particle beams.

The above examples of use are illustrating for the purpose of demonstrating the usefulness of the inorganic oxide flakes of the present invention, and do not limit the scope of the present invention.

EXPLANATIONS OF LETTERS OR NUMERALS

| 1 | CRUCIBLE |
|---|---|
| 2 | TAMMANN TUBE |
| 21 | OPENING |
| 22 | ENTRANCE |
| 3 | ELECTRIC FURNACE |
| D1 | DIAMETER OF CRUICIBLE |
| H1 | HEIGHT OF CRUICIBLE |
| D2 | DIAMETER OF TAMMANN TUBE |
| H2 | HEIGHT OF TAMMANN TUBE |
| Φ | OPENING DIAMETER |
| fp | FORMULATED RAW MATERIAL |
| fm | RAW MATERIAL MELT, MELT |
| fb | BALOON |
| P | LOADED PRESSURE |

**Claims**

1. Inorganic oxide flakes mainly composed of $SiO_2$, $Al_2O_3$, CaO, and $Fe_2O_3$, wherein the mass percentages of the components in terms of oxide in said inorganic oxide flakes are as follows:

   i) the sum of $SiO_2$ and $Al_2O_3$ is 40% by mass or more and 70% by mass or less,
   ii) $Al_2O_3/( SiO_2+ Al_2O_3)$ (mass ratio) is in the range of 0.15-0.40,
   iii) $Fe_2O_3$ is 16% by mass or more and 25% by mass or less, and
   iv) CaO is not less than 5% by mass but not more than 30% by mass.

2. A composition obtained by blending the inorganic oxide flakes of claim 1 to a thermoplastic resin or thermoplastic rubber.

3. The composition according to claim 2 for a part to be irradiated with radiation.

4. A composition obtained by blending the inorganic oxide flakes of claim 1 to a thermosetting resin or curable rubber.

5. A lining material composed of the composition according to claim 4.

6. The lining material according to claim 5 for a part to be irradiated with radiation.

7. A method for producing inorganic oxide flakes comprising a step of melting a mixture of silica source, alumina source, calcium oxide source, and iron oxide source, wherein the mass percentages of the components in terms of oxide in said mixture are as follows:

   i) the sum of $SiO_2$ and $Al_2O_3$ is 40% by mass or more and 70% by mass or less,
   ii) $Al_2O_3/( SiO_2+ Al_2O_3)$ (mass ratio) is in the range of 0.15-0.40,
   iii) $Fe_2O_3$ is 16% by mass or more and not more than 25% by mass,
   iv) CaO is 5% by mass or more and 30% by mass.

8. The method for producing the inorganic oxide flakes according to claim 7, wherein the silica source or alumina source is fly ash.

9. The method for producing inorganic oxide flakes according to claim 7, wherein the iron oxide source is copper slag.

10. The method for producing inorganic oxide flakes according to claim 7, wherein the calcium oxide source is steel slag.

11. The method for producing the inorganic oxide flakes according to claim 7, wherein the silica source or the alumina source is basalt or andesite.

12. Use of inorganic oxide flakes containing $SiO_2$, $Al_2O_3$, CaO, and $Fe_2O_3$ for a part to be irradiated by radiation, wherein in said inorganic oxide flakes in terms of oxides,

   i) the sum of $SiO_2$ and $Al_2O_3$ is 40% by mass or more and 70% by mass or less,
   ii) $Al_2O_3/( SiO_2+ Al_2O_3)$ (mass ratio) is in the range of 0.15-0.40,
   iii) $Fe_2O_3$ is 16% by mass or more and 25% by mass or less, and
   iv) CaO is 5% by mass and not more than 30% by mass.

13. The use of an inorganic oxide flakes for a part to be irradiated with radiation according to claim 12, wherein the part to be irradiated with radiation is any one of the following:

   a) a nuclear reactor building, a nuclear reactor containment vessel, piping inside a nuclear reactor facility, and a decommissioning robot;
   b) a space station building, a space station, an artificial satellite, a planetary exploration satellite, and a space suit; and
   c) medical devices utilizing particle beams.

Fig 1

## INTERNATIONAL SEARCH REPORT

| International application No. |
|---|
| **PCT/JP2021/036084** |

**A. CLASSIFICATION OF SUBJECT MATTER**

*C03C 12/00*(2006.01)i; *C03B 37/005*(2006.01)i; *C03C 3/062*(2006.01)i; *C03C 3/087*(2006.01)i; *G21C 13/00*(2006.01)i; *G21D 1/00*(2006.01)i; *G21F 9/30*(2006.01)i
FI: C03C12/00; C03B37/005; C03C3/062; C03C3/087; G21C13/00 200; G21C13/00 300; G21D1/00 B; G21F9/30 535F

According to International Patent Classification (IPC) or to both national classification and IPC

**B. FIELDS SEARCHED**

Minimum documentation searched (classification system followed by classification symbols)

C03C1/00-14/00; C03B37/005; C08K3/00-13/08

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

INTERGLAD

**C. DOCUMENTS CONSIDERED TO BE RELEVANT**

| Category* | Citation of document, with indication, where appropriate, of the relevant passages | Relevant to claim No. |
|---|---|---|
| Y | WO 2004/076372 A1 (NIPPON SHEET GLASS CO., LTD.) 10 September 2004 (2004-09-10) description, page 1, lines 3-11, page 3, lines 3-8, page 7, lines 15-26 | 1-2, 4-5 |
| A | | 3, 6-13 |
| Y | JP 60-231440 A (WALT DISNEY PRODUCTIONS) 18 November 1985 (1985-11-18) page 8, lower right column, line 6 to page 9, upper left column, line 12 | 1-2, 4-5 |
| A | | 3, 6-13 |
| Y | PEREZ, Maximina Romeo et al. Magnetic properties of glasses with high iron oxide content. Materials Research Bulletin, 2001, vol. 36, pp. 1513-1520 table 1 | 1-2, 4-5 |
| A | | 3, 6-13 |
| Y | JP 10-167754 A (TOSHIBA GLASS CO., LTD.) 23 June 1998 (1998-06-23) paragraphs [0031]-[0044] | 1-2, 4-5 |
| A | | 3, 6-13 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 November 2021** | **14 December 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

| International application No. |
|---|
| **PCT/JP2021/036084** |

| C. | DOCUMENTS CONSIDERED TO BE RELEVANT | |
|---|---|---|
| Category* | Citation of document, with indication, where appropriate, of the relevant passages | Relevant to claim No. |
| P, A | WO 2020/218356 A1 (NIPPON FIBER CORP.) 29 October 2020 (2020-10-29)<br>claims | 1-13 |

Form PCT/ISA/210 (second sheet) (January 2015)

INTERNATIONAL SEARCH REPORT
Information on patent family members

International application No.

**PCT/JP2021/036084**

| Patent document cited in search report | | | Publication date (day/month/year) | Patent family member(s) | | | Publication date (day/month/year) |
|---|---|---|---|---|---|---|---|
| WO | 2004/076372 | A1 | 10 September 2004 | EP 1602632 A1 paragraphs [0001], [0002], [0010], [0011], [0036], [0037] US 2006/0048679 A1 CN 1720203 A | | | |
| JP | 60-231440 | A | 18 November 1985 | EP 159173 A2 description, page 15, line 25 to page 16, line 24 | | | |
| JP | 10-167754 | A | 23 June 1998 | (Family: none) | | | |
| WO | 2020/218356 | A1 | 29 October 2020 | WO 2020/217568 A1 | | | |

Form PCT/ISA/210 (patent family annex) (January 2015)

**REFERENCES CITED IN THE DESCRIPTION**

**Patent documents cited in the description**

- WO 2010024283 A1
- US 20110151261 A1
- WO 2004076372 A1
- US 20060048679 A1